# EUROPEAN PATENT APPLICATION

(11) **EP 3 978 702 A1**
(43) Date of publication of application: **06.04.2022**
(21) Application number: 21196247.7
(22) Date of filing: 13.09.2021
(51) Int. Cl.: E04D 13/10, E04D 13/12, E04G 21/32, E06C 1/34, F24S 25/613

(54) **FASTENING ARRANGEMENT FOR FASTENING ROOF EQUIPMENT TO A ROOF**

(30) Priority: 30.09.2020 SE 2051138
(71) Applicant: CWL Patent AB, 792 22 Mora (SE)
(72) Inventor: Lundberg, Bengt, 792 52 Mora (SE)
(74) Representative: Ehrner & Delmar Patentbyrå AB

(57) **Abstract**

The invention relates to a fastening arrangement (100) for fastening roof equipment (200) to a roof (300) and to a system (400) comprising such a fastening arrangement (100). The fastening arrangement (100) comprises at least one mounting plate (110) comprising at least one first fastening means (112) for fastening the mounting plate (110) to a roof structure (310) of a roof (300), and at least one first deformation portion (116) configured to deform at a first deformation level (d1); and at least one bracket (120) attached to the mounting plate (110) and comprising at least one engagement means (122) for engagement with a roof equipment (200), and at least one a second deformation portion (126) configured to deform at a second deformation level (d2), wherein the first deformation level (d1) is higher or lower than the second deformation level (d2). The invention also relates to a system comprising such a fastening arrangement.

## Description

### Technical Field

The invention relates to a fastening arrangement for fastening roof equipment to a roof. Furthermore, the invention also relates to a system comprising such a fastening arrangement.

### Background

Different fastening arrangements for fastening or attaching roof equipment to a roof are provided on the market. Such fastening arrangements may comprise one or more brackets for engagement with the roof equipment and one or more fastening means or fastening devices, such as mounting plates, for fastening the bracket to a roof. Examples of roof equipment are ladders, snow fences, safety equipment and solar panels.

### Summary

An objective of embodiments of the invention is to provide a solution which mitigates or solves the drawbacks and problems of conventional solutions.

The above and further objectives are solved by the subject matter of the independent claims. Further advantageous embodiments of the invention can be found in the dependent claims.

According to a first aspect of the invention, the above mentioned and other objectives are achieved with a fastening arrangement for fastening roof equipment to a roof, the fastening arrangement comprising:
at least one mounting plate comprising
   at least one first fastening means for fastening the mounting plate to a roof structure of a roof, and
   at least one first deformation portion configured to deform at a first deformation level; and
at least one bracket attached to the mounting plate and comprising
   at least one engagement means for engagement with a roof equipment, and
   at least one a second deformation portion configured to deform at a second deformation level, wherein the first deformation level is higher or lower than the second deformation level.

Hence, the first deformation portion is configured to deform at a first deformation level e.g. when receiving a first excessive load, and the second deformation portion is configured to deform at the second deformation level e.g. when receiving a second excessive load. The first and second excessive loads are different from each other e.g. depending on the application determined by the roof equipment.

A mounting plate may also be denoted a fastening plate or a fastening portion herein. Further, a roof structure may be understood as any construction structure constituting and being part of a roof, e.g. a plain roof surface or roof battens.

In an embodiment of a fastening arrangement according to the first aspect, the first deformation portion and the second deformation portion are serially coupled such that the first deformation portion and the second deformation portion deform in a sequential order depending on the values of the first deformation level and the second deformation level.

The first and second deformation portions may be considered to be serially coupled from an energy absorption perspective. This may be understood that when an impact force acts on the fastening arrangement a first part of the impact force will be absorbed by the first deformation portion and a second part of the impact force will be absorbed by the second deformation portion. The sequential order will be such that the deformation portion having the lowest value will deform first. For example, if the first deformation level is higher than the second deformation level, the second deformation portion will deform first; and if the first deformation level is lower than the second deformation level, the first deformation portion will deform first.

An advantage of the fastening arrangement according to the first aspect is that since the first and second deformation portions are arranged to deform at different load levels and the deformation coupled therebetween the energy absorption properties of the fastening arrangement may be adapted to different applications and scenarios for improved performance. Hence, the fastening arrangement according to the first aspect also provides a flexible solution for designing the energy absorbing properties of a fastening arrangement so as to adapt to different applications determined by the roof equipment engaged with the fastening arrangement.

In an embodiment of a fastening arrangement according to the first aspect, the first deformation level is higher than the second deformation level.

Depending on the application it is advantage if the first deformation level is higher than the second deformation level. For example, in safety applications for fall protection the applied impact force may convert from an extraction force to a shear force. In these cases, it is preferred that the first deformation level is higher than the second deformation level. Depending on the application it is advantage if the first deformation level is lower than the second deformation level.

In an embodiment of a fastening arrangement according to the first aspect, the first deformation level is lower than the second deformation level. For example, in snow protection applications snow racks are often used. It is important that the show racks are held at its height position by one or more brackets so as to stop snow from sliding down the roof. Therefore, it is preferred that the first deformation level is lower than the second deformation level in these cases.

In an embodiment of a fastening arrangement according to the first aspect, the second deformation level is 20 - 100% of the first deformation level, or vice versa.

In an embodiment of a fastening arrangement according to the first aspect, the second deformation level is 40 - 80% of the first deformation level, or vice versa.

In an embodiment of a fastening arrangement according to the first aspect, the second deformation level is 45 - 55% of the first deformation level, or vice versa.

In an embodiment of a fastening arrangement according to the first aspect, the first deformation level and/or the second deformation level is pre-defined.

The pre-defined deformation levels may be given by industrial standards and/or governmental requirements.

In an embodiment of a fastening arrangement according to the first aspect,
the first deformation portion comprises a first yielding zone configured tear apart at a first load level corresponding to the first deformation level, and
the second deformation portion comprises a second yielding zone configured tear apart at a second load level corresponding to the second deformation level.

In an embodiment of a fastening arrangement according to the first aspect, the first deformation portion comprises one or more first deformation initiators.

In an embodiment of a fastening arrangement according to the first aspect, the one or more first deformation initiators are arranged at a front portion and/or a middle portion of the mounting plate.

In an embodiment of a fastening arrangement according to the first aspect, the second deformation portion comprises one or more second deformation initiators.

In an embodiment of a fastening arrangement according to the first aspect, the one or more second deformation initiators are arranged at a front portion of the bracket.

In an embodiment of a fastening arrangement according to the first aspect, the fastening arrangement comprises at least one attachment means for attaching the mounting plate to the bracket, or vice versa.

In an embodiment of a fastening arrangement according to the first aspect, the attachment means has a vertical extension extending outwards from a plane of the roof, and wherein the bracket is attached to the mounting plate at the vertical extension.

In an embodiment of a fastening arrangement according to the first aspect, the first deformation portion is arranged adjacent to the attachment means.

In an embodiment of a fastening arrangement according to the first aspect, the mounting plate extends parallel to a plane of the roof and the bracket is configured to extend outwards in an angle to the plane of the roof in operation.

According to a second aspect of the invention, the above mentioned and other objectives are achieved with a system comprising:
at least one fastening arrangement according to any one of the preceding claims; and
at least one roof equipment.

Further applications and advantages of the embodiments of the invention will be apparent from the following detailed description.

### Brief Description of the Drawings

The appended drawings are intended to clarify and explain different embodiments of the invention, in which:
- Fig. 1 shows a fastening arrangement in a side view according to an embodiment of the invention;
- Fig. 2 shows a fastening arrangement in a side view according to a further embodiment of the invention;
- Fig. 3 and 4 show a fastening arrangement in a perspective view according to a further embodiment of the invention;
- Fig. 5 to 8 illustrate different examples of first deformation portion layouts according to embodiments of the invention;
- Fig. 9 shows a mounting plate in a perspective view according to an embodiment of the invention;
- Fig. 10 shows a fastening arrangement in a perspective view according to a further embodiment of the invention; and
- Fig. 11 illustrates a house having a roof with a roof structure.

### Detailed Description

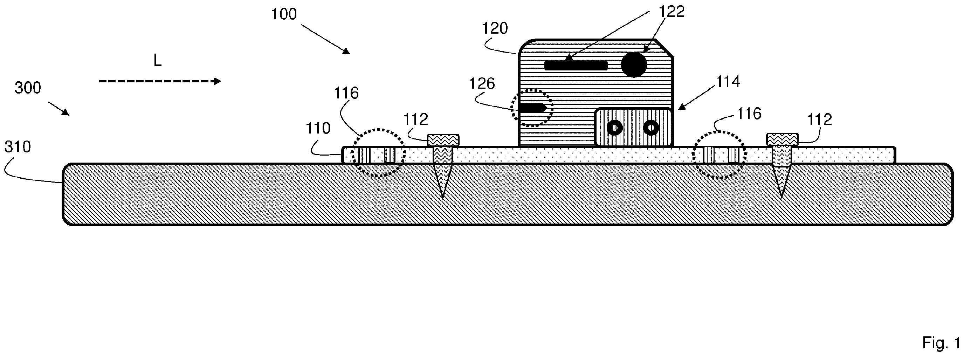

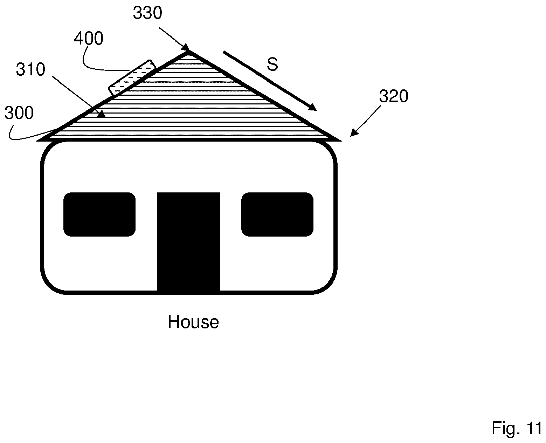

Fig. 1 shows a fastening arrangement 100 according to embodiments of the invention seen in a side view. With reference to Fig. 1, the present fastening arrangement 100 comprises at least one mounting plate 110 which in turn comprises at least one first fastening means 112 for fastening the mounting plate 110 to a roof structure 310 of a roof 300 (see also Fig. 11), e.g. to a plain surface of a roof or to battens. The fastening means 112 are configured for fastening or anchoring the mounting plate 110 to the roof structure 310 of the roof 300. For example, screws, nails or any other suitable fastening means may be used for safe and secure anchoring of the mounting plate 110. The roof structure 310 may as shown in Fig. 1 be a surface of the roof, e.g. covered with suitable material. However, in other cases the roof structure 310 may be battens of a roof construction arranged in a suitable pattern.

The fastening arrangement 100 further comprises at least one bracket 120 attached or fastened to the mounting plate 110 as shown in Fig. 1. The bracket 120 comprises at least one engagement means 122 for engagement with a roof equipment (not shown in Fig. 1). The engagement means 122 as shown in Fig. 1 are elongated and circular through holes for engagement with corresponding engagement means of roof equipment but are not limited thereto. Non-limiting examples of engagement means 132a, 132b,..., 132n are circular through holes in different sizes, elongated slots and slits that may or may not be combined with circular holes. Other non-limiting examples of engagement means 132a, 132b,..., 132n may be different types of couplings and connections such as screw connections and bolt connections. Further non-limiting examples are protrusions or other protruding portions for engagement with a roof equipment.

Furthermore, the mounting plate 110 also comprises at least one first deformation portion 116 configured to deform at a first deformation level d1. The bracket 120 of the fastening arrangement 100 on the other hand comprises at least one a second deformation portion 126 which is configured to deform at a second deformation level d2. According to embodiments of the invention, the first deformation level d1 is different from the second deformation level d2 such that the first deformation level d1 is higher or lower than the second deformation level d2 depending on the application which e.g. may be determined by the roof equipment.

The first deformation portion 116 and the second deformation portion 126 are considered to be serially coupled such that the first deformation portion 116 and the second deformation portion 126 deform in a sequential deformation order depending on the values of the first deformation level and the second deformation level. Hence, the serial coupling of the first deformation portion 116 and the second deformation portion 126 can be seen as a serial coupling in an energy absorption perspective for controlled deformation of the fastening arrangement 100. That is, the the first deformation portion 116 and the second deformation portion 126 are energy absorption serially coupled.

In embodiments of the invention, the first deformation level d1 is higher than the second deformation level d2, i.e. d1 > d2. This means that the sequential order will be that the second deformation portion will deform before the first deformation portion. Depending on the application in some cases it is advantage if the first deformation level is higher than the second deformation level.

In other embodiments of the invention, the first deformation level d1 is lower than the second deformation level d2, i.e. d1 < d2. This means that the sequential order will be that the first deformation portion will deform before the second deformation portion. Depending on the application in some cases it is advantage if the first deformation level is lower than the second deformation level.

The second deformation level may be 20 - 100% of the first deformation level, or vice versa. More specifically, the second deformation level may be 40 - 80% of the first deformation level, or vice versa. Even more specifically, the second deformation level may be 45 - 55% of the first deformation level, or vice versa. Even more specifically, the second deformation level may around 55% of the first deformation level, or vice versa. The intervals and values within the intervals may relate to different applications dependent on the roof equipment.

In embodiments of the invention, the first deformation portion 116 comprises a first yielding zone configured tear apart at a first load level corresponding to or being associated with the first deformation level d1, and the second deformation portion 126 comprises a second yielding zone configured tear apart at a second load level corresponding to or being associated with the second deformation level d2. The deformation portion(s) are designed to deform at different load levels and hence for different applications with different load level requirements of deformation. Such different load levels may e.g. be set or designed based on the number of deformation portions arranged on the bracket, the size and location of each deformation portion, the thickness of the bracket and the mounting plate, etc. Generally, a deformation portion may be designed to deform when being impacted by excessive load levels corresponding to different threshold levels. Such load or impact force threshold levels may conform to regulatory requirements e.g. stipulated by government authorities and/or to standard requirements in the industry. Hence, in embodiments of the invention the first deformation level and/or the second deformation level may be pre-defined, e.g. by government authorities or set by industry standards. For example, on elevated structures such as roofs, there is a requirement that approved fall protection systems must be present if the vertical drop is more than 2 meters. The requirement further states that on roofs with low roof pitches or slopes, the roof must have arrangements that offer anchoring of persons if they are closer than 2 meters from the edge of the roof. For roofs with higher roof pitches, there is a requirement that persons on the roof be anchored at all times. Some solutions for securing persons on roofs include walkways, roof ladders, snow fences and the like on condition that they are installed in accordance with approved installation instructions. Other solutions include specific anchoring systems such as posts that are anchored to the roof and steel wires running between the posts. A person with personal fall safety equipment can hook onto the wires and can thereby move around on the roof. In any of these solutions, an approved system shall be able to handle dynamic tests with a weight of 100 kg falling freely from 2.5 meters and static tests with a weight of 1000 kg hanging freely for 3 minutes. The present fastening arrangement 100 can easily be designed to fulfil such requirements.

Furthermore, different designs of the first and second deformation portions are possible. A non-limiting example is the disclosed deformation portion being a cut out having an open portion facing the roof ridge in operation which is the same as facing the load L direction or impact force direction as shown in Fig. 1. The deformation portion allows deformation and tearing apart at loads exceeding predetermined threshold values e.g. for the purpose of preventing inelastic pull from a falling person having a life-line fastened in a roof equipment such as a rack pipe or a holding profile.

Moreover, the fastening arrangement 100 may comprise at least one attachment means 114 for attaching the mounting plate 110 to the bracket 120, or vice versa. In Fig. 1 the attachment means 114 has a vertical extension which extends outwards from a plane or surface of the roof 300 and hence outwards from the mounting plate 110 in operation. The bracket 120 is attached to the mounting plate 110 at the vertical extension. The attachment means 114 may comprise any suitable means for attaching the mounting plate 110 to the bracket 120, or vice versa, e.g. bolt connections, screws and welding.

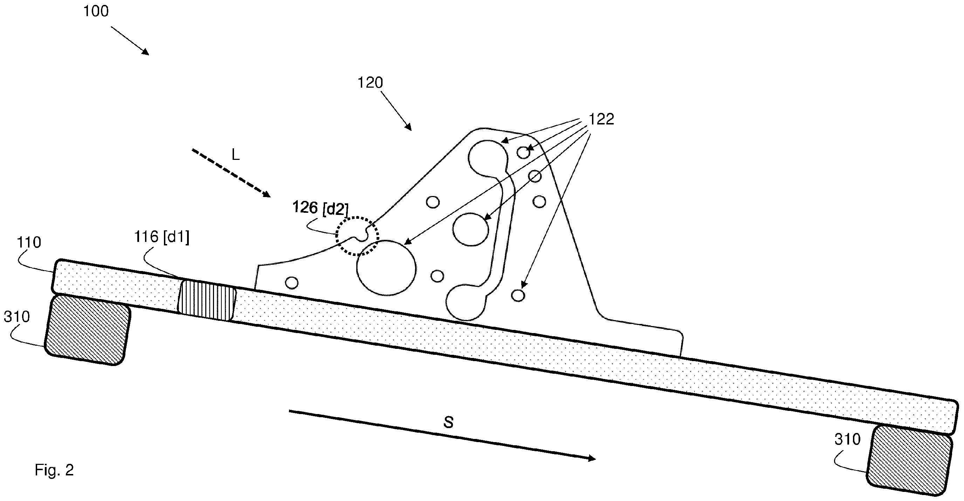

Fig. 2 shows a fastening arrangement 100 according to another embodiment of the invention. The fastening means 122 are not illustrated in Fig. 2. The bracket 120 comprises in this case multiple different engagement means 122 in the form of through holes and slits with different shapes and in different combinations. Further, the second deformation portion 126 of the bracket 120 is arranged close to or adjacent to one of the through hole forming an engagement means 122. Thereby, the second deformation portion 126 may cooperate with the through hole when impacted by an excessive load L for improved energy absorption. The first deformation portion 116 of the mounting plate 110 arranged in front of the bracket 120 is also illustrated in Fig. 2. The slope S direction of the roof is also illustrated in Fig. 2.

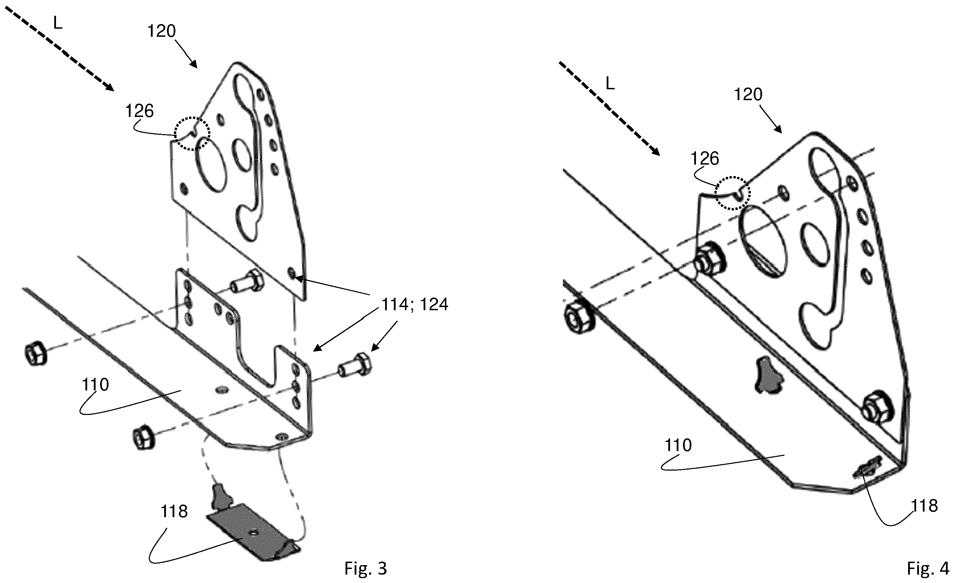

Fig. 3 and 4 illustrate yet another fastening arrangement 100 according to an embodiment of the invention having a mounting plate 110 with an elongated band shape. The mounting plate 110 also comprises a vertical attachment section for attachment to the bracket 120 using bolt connections. The vertical attachment section is formed by folding a section of the mounting plate 110. Further, as disclosed the mounting plate 110 may have dedicated holes for receiving rubber protection means 118 to be arranged under the mounting plate 110 and above a roof tile when in operation. Thus, mechanical damage on the tile is reduced and also undesired noise generated due to the mechanical contact between the mounting plate 110 and the tile can be reduced.

The mounting plate 110 of the present fastening arrangement 100 may comprise any number of first deformation portions 116 and second deformation portions 126. In the example shown in Fig. 1, a first deformation portion 112 is arranged at the front portion of the mounting plate 110 in front of the bracket 120 and another first deformation portion 112 is arranged behind the bracket 120 at the back portion of the mounting plate 110. As further noted from Fig. 1, a second deformation portion 126 is arranged at the front portion of the bracket 120 in the direction from which the excessive load L may act on the fastening arrangement 100 illustrated with the arrow. The front portion of the bracket 120 may be considered to be the part of the bracket 120 facing the direction of the excessive load L.

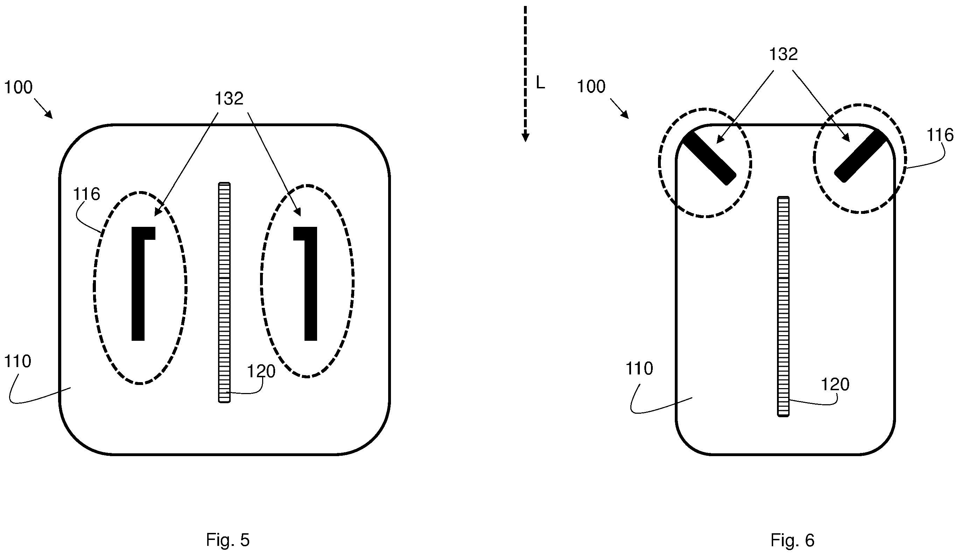

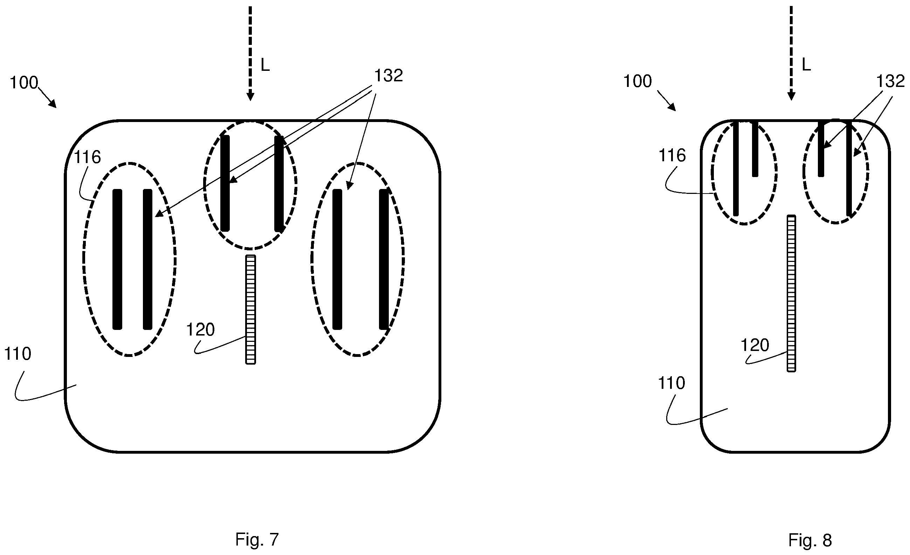

Figs. 5 to 8 illustrates different designs of first deformation portions 116 of the mounting plate 110 seen in a view from above. As shown in mentioned Figs. a first deformation portion 116 may comprise one or more first deformation initiators 132 arranged in a suitable pattern at the mounting plate 110 for desired energy absorption properties. Examples of deformation initiators may be cut outs, indentations (such as kerfs or nicks) and/or weakening sections. The deformation initiators may act as deformation guides for controlled deformation when an excessive load L is acting on the fastening arrangement 100. As also illustrated Figs. 5 - 8, the one or more first deformation initiators 132 may be arranged at a front portion and/or a middle portion of the mounting plate 110. The front portion of the mounting plate 110 may be considered as the part of the mounting plate 110 facing the direction of the excessive load L.

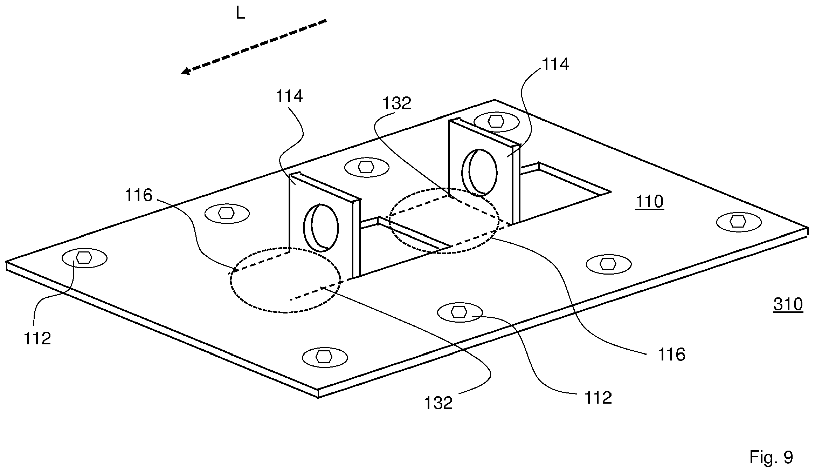

Fig. 9 shows yet another mounting plate 110 according to embodiments of the invention. The first deformation initiators 132 are here weakening lines (i.e. the dashed lines in the Fig.) that are arranged adjacent to the attachment means 114. Since the deformation initiators 132 may act as deformation guides the fastening arrangement 100 in Fig. 9 is configured to partially tear apart in the direction of the excessive load L guided by the deformation initiators 132.

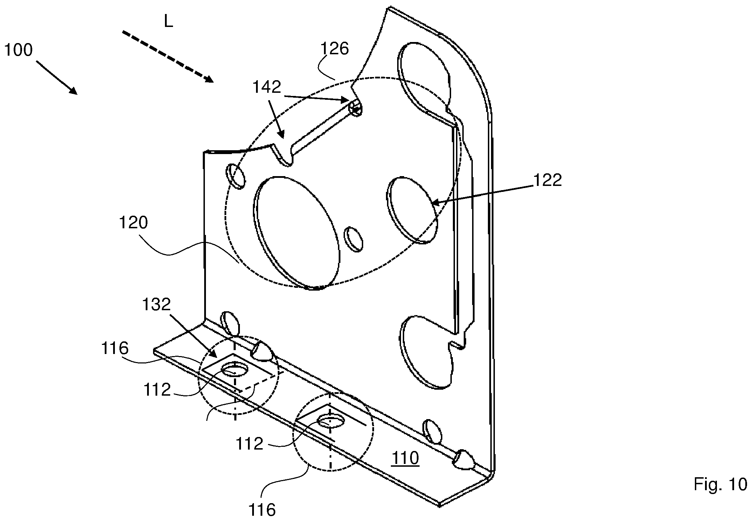

Generally, the deformation initiators may be considered to define/delimit a deformation portion. This is valid for both the first 132 and second 142 deformation portions of the mounting plate 110 and bracket 120, respectively. Therefore, the second deformation portion 126 may also comprise second deformation initiators 142 as shown in Fig. 10. The second deformation initiators 142 define the second deformation portion 126. It is also realized that the second deformation initiators 142 may together with the engagement means 122 define a second deformation portion 126 as aforementioned. This implies that the engagement means may also be used for defining a second deformation portion 142.

As also noted in Fig. 10, the second deformation initiators 142 are arranged at a front portion of the bracket 120. As previously mentioned, the mounting plate 110 may extend parallel to a plane of the roof 300 and the bracket 120 may extend outwards in an angle, e.g. 90 degrees as in this case, to the plane of the roof 300 in operation. The mounting plate 110 in Fig. 10 includes two first deformation portions 116, each first deformation portion being defined by indentations or weakening sections arranged adjacent or close to the location where the bracket 120 is attached to the mounting plate 100, or vice versa. Thereby, guided energy absorption is provided which in this case means that the fastening arrangement 100 will tear apart in the direction of the excessive load L for controlled deformation.

Fig. 11 illustrates a house having a roof structure 310 of a roof 300 with a slope S with a certain sloping angle. The roof structure 310 may e.g. comprise of battens extending in horizontal lines and being arranged in parallel to each other seen from the ridge 330 of the roof to the eaves 320 or roof projection as shown in Fig. 11. The battens on which the tiles are supported may be arranged on a construction of counter battens which however is not shown in Fig. 11.

Embodiments of the invention also relates to a system 400 comprising at least one fastening arrangement 100 according to embodiments of the invention and at least one roof equipment 200. By coupling any number of mounting plates 110 and brackets 130 to one or more roof equipment any type of roof system can be formed. Non-limiting examples of roof equipment are walkways, roof ladders, solar panels, ridge and roof rails, hatches, guardrails, snow stoppers, roof steps, etc. Especially, fall protection devices and other safety devices may advantageously be combined with the present fastening arrangement 100 since the energy absorption properties of the fastening arrangement 100 easily can be controlled.

The present fastening arrangement 100 may be produced from sheet metal parts bent in suitable shapes. Hence, sheet metal may be punched in different shapes and thereafter bent or folded for producing different parts of the fastening arrangement 100 and the system 400 according to embodiments of the invention. The different parts of the fastening arrangement 100 may thereafter be attached to each other by means of suitable attachment means known in the art.

Finally, it should be understood that the invention is not limited to the embodiments described above, but also relates to and incorporates all embodiments within the scope of the appended independent claims.

## Claims

1. A fastening arrangement (100) for fastening roof equipment (200) to a roof (300), the fastening arrangement (100) comprising:
at least one mounting plate (110) comprising
at least one first fastening means (112) for fastening the mounting plate (110) to a roof structure (310) of a roof (300), and
at least one first deformation portion (116) configured to deform at a first deformation level (d1); and
at least one bracket (120) attached to the mounting plate (110) and comprising
at least one engagement means (122) for engagement with a roof equipment (200), and
at least one a second deformation portion (126) configured to deform at a second deformation level (d2), wherein the first deformation level (d1) is higher or lower than the second deformation level (d2).

2. The fastening arrangement (100) according to claim 1, wherein the first deformation portion (116) and the second deformation portion (126) are serially coupled such that the first deformation portion (116) and the second deformation portion (126) deform in a sequential order depending on the values of the first deformation level and the second deformation level.

3. The fastening arrangement (100) according to claim 1 or 2, wherein the first deformation level (d1) is higher than the second deformation level (d2).

4. The fastening arrangement (100) according to claim 1 or 2, wherein the first deformation level (d1) is lower than the second deformation level (d2).

5. The fastening arrangement (100) according to claim 3 or 4, wherein the second deformation level is 20 - 100% of the first deformation level, or vice versa.

6. The fastening arrangement (100) according to claim 5, wherein the second deformation level is 40 - 80% of the first deformation level, or vice versa.

7. The fastening arrangement (100) according to any one of the preceding claims, wherein
the first deformation portion (116) comprises a first yielding zone configured tear apart at a first load level corresponding to the first deformation level (d1), and
the second deformation portion (126) comprises a second yielding zone configured tear apart at a second load level corresponding to the second deformation level (d2).

8. The fastening arrangement (100) according to any one of the preceding claims, wherein the first deformation portion (116) comprises one or more first deformation initiators (132).

9. The fastening arrangement (100) according to claim 8, wherein the one or more first deformation initiators (132) are arranged at a front portion and/or a middle portion of the mounting plate (110).

10. The fastening arrangement (100) according to any one of the preceding claims, wherein the second deformation portion (126) comprises one or more second deformation initiators (142).

11. The fastening arrangement (100) according to claim 10, wherein the one or more second deformation initiators (142) are arranged at a front portion of the bracket (120).

12. The fastening arrangement (100) according to any one of the preceding claims, comprising at least one attachment means (114) for attaching the mounting plate (110) to the bracket (120), or vice versa.

13. The fastening arrangement (100) according to claim 12, wherein the attachment means (114) has a vertical extension extending outwards from a plane of the roof (300), and wherein the bracket (120) is attached to the mounting plate (110) at the vertical extension.

14. The fastening arrangement (100) according to claim 12 or 13, wherein the first deformation portion (116) is arranged adjacent to the attachment means (114).

15. The fastening arrangement (100) according to any one of the preceding claims, wherein the mounting plate (110) extends parallel to a plane of the roof (300) and the bracket (120) is configured to extend outwards in an angle to the plane of the roof (300) in operation.
